Europäisches Patentamt

European Patent Office

Office européen des brevets

(19)

(11) Numéro de publication : **0 070 766
B2**

(12)     # NOUVEAU FASCICULE DE BREVET EUROPÉEN

(45) Date de publication du nouveau fascicule du brevet :
08.07.87

(51) Int. Cl.⁴ : **F 16 C 11/02**

(21) Numéro de dépôt : **82401313.0**

(22) Date de dépôt : **12.07.82**

(54) **Tourillon de montage de deux pièces.**

(30) Priorité : **16.07.81 FR 8113899**

(43) Date de publication de la demande :
**26.01.83 Bulletin 83/04**

(45) Mention de la délivrance du brevet :
**21.11.84 Bulletin 84/47**

(45) Mention de la décision concernant l'opposition :
**08.07.87 Bulletin 87/28**

(84) Etats contractants désignés :
**AT BE CH DE GB IT LI NL SE**

(56) Documents cités :
**DE-A- 2 302 111
DE-A- 2 541 263
DE-C-   269 084
FR-E-    47 746
GB-A-    12 578
GB-A-   236 466
US-A- 1 708 981**

(73) Titulaire : **René TOUROLLE ET FILS Société à Responsabilité Limitée
La Motte Zone Industrielle de Souilly
F-77410 Claye-Souilly (FR)**

(72) Inventeur : **Forni, Daniel Maximilien
9, avenue Victor Hugo
F-93000 Sevran (FR)**

(74) Mandataire : **Hoisnard, Jean-Claude et al
Cabinet Beau de Lomenie 55, rue d'Amsterdam
F-75008 Paris (FR)**

EP 0 070 766 B2

## Description

En mécanique, il est très souvent fait appel à des montages tourillonnants permettant le pivotement relatif de deux pièces. Parfois, et tel est le cas de certains joints de transmission, non seulement les pièces doivent pouvoir pivoter autour de l'axe de leur tourillonnement, mais doivent, en outre, transmettre un couple (GB-A- 12 578/1909).

Selon une disposition antérieure, connue par exemple par DE-A- 2 541 263, un tourillon de montage disposé entre deux pièces, tel que celui réalisant le montage à pivotement de ces deux pièces, est constitué par une fourche à au moins deux branches parallèles, dont est munie une première des deux pièces ; une charnière de tourillon solidaire de la deuxième pièce ; trois trous coaxiaux ménagés dans les deux dites branches et dans ladite charnière, respectivement ; et, un axe de tourillon qui est concomitamment introduit dans ces trois trous, et qui comprend deux parties d'extrémité dont les diamètres sont différents, l'une de ces parties d'extrémité étant filetée et susceptible de coopérer avec un taraudage ménagé dans le trou dont est munie l'une des branches de la fourche de la première pièce, et une partie médiane, qui est disposée entre les deux dites parties d'extrémité, qui constitue la partie tourillonnante proprement dite du montage, qui coopère avec le trou, dont est munie la deuxième pièce, et dont le diamètre a une valeur inférieure au plus grand des diamètres des deux parties d'extrémité.

Dans une telle disposition, le tourillonnement est réalisé au moyen d'un œil placé entre les deux branches d'une fourche et d'un axe traversant l'ensemble et l'effet du couple est d'écarter les deux branches de ladite fourche jusqu'à l'endommagement définitif du dispositif.

Pour remédier à cette défaillance et pour réaliser un montage simple de l'axe de tourillon, l'invention a pour objet de compléter la disposition antérieurement connue de manière que l'autre des deux parties d'extrémité soit également filetée selon un pas ayant une valeur commune et placé sur une hélice commune au pas de la première partie filetée d'extrémité, et soit susceptible de coopérer avec un taraudage ménagé en correspondance dans le trou dont est munie l'autre branche de la fourche de la première pièce, cependant que le diamètre de la partie médiane de l'axe est supérieur au diamètre externe du filetage de l'extrémité de plus petit diamètre dudit axe, et, qu'un épaulement assure le raccordement de la partie médiane avec la partie d'extrémité de plus petit diamètre de l'axe et constitue une face d'appui de blocage en position de l'axe sur celle des deux branches qui comporte le trou coopérant avec l'extrémité filetée de plus petit diamètre dudit axe.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels :

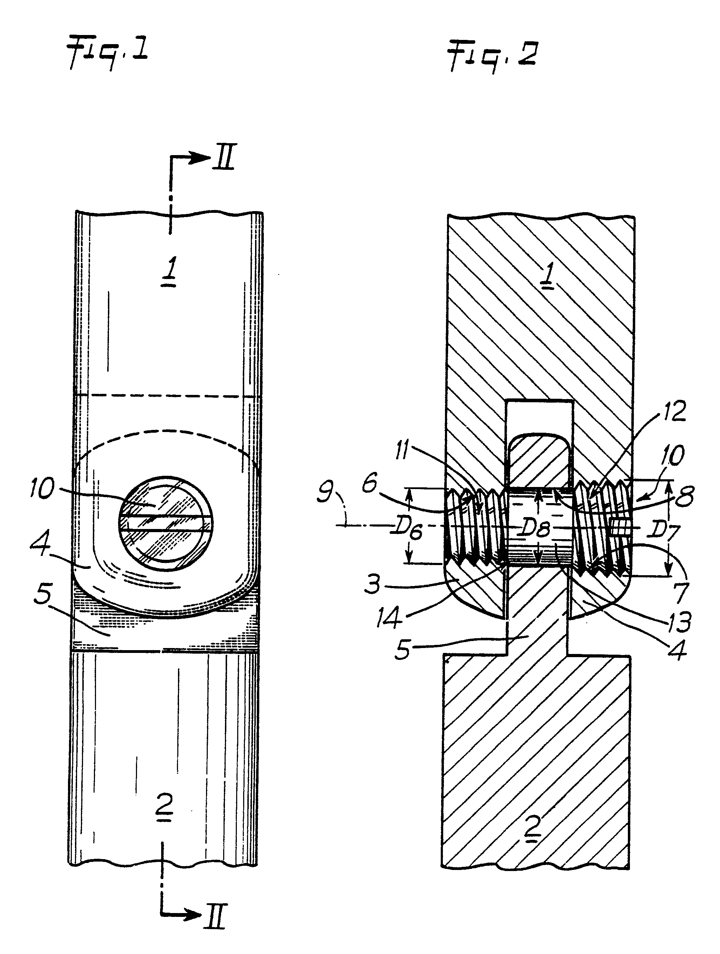

la figure 1 est une vue en élévation d'un ensemble conforme à l'invention ; et,

la figure 2 est une coupe suivant II-II de la figure 1.

Le dispositif représenté est celui de deux tiges 1 et 2, qui font partie d'un ensemble de paires de tiges montées coulissantes dans deux groupes d'alésages solidaires de deux arbres rotatifs et généralement non alignés : un arbre menant et un arbre mené. Un couple d'entraînement est donc généralement transmis de la tige 1 vers la tige 2 par l'intermédiaire d'un dispositif d'assemblage.

Celui-ci est constitué par :

une fourche à deux branches parallèles 3 et 4, solidaires de la tige 1,

une plaque d'accouplement 5, formant charnière de tourillon, solidaire de la tige 2, et susceptible d'être introduite avec jeu, entre les branches 3 et 4,

un trou taraudé 6, usiné dans la branche 3, au diamètre de fond de filets D6,

un trou taraudé 7, usiné dans la branche 4, au diamètre de fond de filets D7,

un trou lisse, cylindrique 8, ménagé dans la plaque 5, de diamètre D8.

Les diamètres D6, D7, D8 ont des valeurs distinctes telles que :

D7 est supérieur à D8,

D8 est supérieur à D6.

Par ailleurs, ces divers trous ont un axe géométrique commun 9. De plus, une vis particulière 10 réalise l'assemblage. Cette vis comporte deux parties d'extrémité filetées 11 et 12, dont les filetages correspondent aux taraudages 6 et 7, respectivement, et une partie médiane 13 cylindrique, lisse, dont le diamètre est très sensiblement égal au diamètre D8, au jeu de montage près. En outre, un épaulement 14 relie le filetage 11 à la partie médiane 13 et constitue une butée de blocage de la vis sur la face interne de la branche 3.

Il doit enfin être précisé que, bien entendu, pour que les taraudages 6 et 7, d'une part, et que les filetages 11 et 12, d'autre part, puissent coopérer concomitamment, il est nécessaire qu'ils soient réalisés selon un pas de taraudage, respectivement de filetage constant, unique, relatif à une hélice unique, ceci malgré les différences de diamètres indiquées, telles que, dans un exemple de réalisation :

D6 = 8 mm ; D8 = 9 mm ; et D7 = 10 mm.

A titre indicatif, pour réaliser les taraudages 6 et 7, un taraud spécial a été utilisé, dont la partie principale correspond au diamètre D7 et dont l'extrémité a été rectifiée et réduite au diamètre D6.

Avec les dispositions adoptées, on comprend qu'il est possible, d'une part, de réaliser le montage pivotant autour de l'axe 9 de la tige 2 par rapport à la tige 1, au moyen de la partie lisse 13 de la vis 10, d'autre part, de maintenir constant l'écartement des branches 3 et 4 du fait de la rigidification de leurs extrémités assurée par la vis unique 10.

Ainsi, de ce deuxième point de vue, un couple transmis entre les deux tiges 1 et 2 n'a plus pour effet, comme cela se produisait avant l'invention, de provoquer un écartement des branches 3 et 4 pouvant aller jusqu'à la destruction de l'assemblage.

A titre indicatif, pour une application déterminée, alors qu'avant l'invention il n'était possible, avec un ensemble déterminé, que de transmettre dans de bonnes conditions un couple de 200 newton par mètre pendant 1000 heures avant détérioration, avec le même ensemble, mais équipé d'articulations telles que celle qui vient d'être décrite, il a été possible de transmettre un couple de 400 newton par mètre pendant 3 000 heures, avant détérioration.

## Revendication

Tourillon de montage disposé entre deux pièces (1 et 2), tel que celui réalisant le montage à pivotement de ces deux pièces, constitué par :
une fourche à au moins deux branches parallèles (3, 4), dont est munie une première (1) des deux pièces,
une charnière (5) de tourillon solidaire de la deuxième pièce (2),
trois trous coaxiaux (6, 7, 8) ménagés dans les deux dites branches et dans ladite charnière, respectivement, et,
un axe de tourillon (10), qui est concomitamment introduit dans ces trois trous, et qui comprend deux parties d'extrémité (11, 12) dont les diamètres sont différents, l'une (12) de ces parties d'extrémité étant filetée et susceptible de coopérer avec un taraudage (7) ménagé dans le trou dont est munie l'une (4) des branches de la fourche de la première pièce, et une partie médiane (13), qui est disposée entre les deux dites parties d'extrémité (11, 12), qui constitue la partie tourillonnante proprement dite du montage, qui coopère avec le trou (8), dont est munie la deuxième pièce (2), et, dont le diamètre (D8) a une valeur inférieure au plus grand (D7) des diamètres des deux parties d'extrémité, caractérisé en ce que l'autre (11) des deux parties d'extrémité est également filetée selon un pas ayant une valeur commune et placé sur une hélice commune au pas de la première (12) partie filetée d'extrémité, et est susceptible de coopérer avec un taraudage (6) ménagé en correspondance dans le trou dont est munie l'autre branche (3) de la fourche de la première pièce, en ce que le diamètre (D8) de la partie médiane (13) de l'axe (10) est supérieur au diamètre externe (D6) du filetage de l'extrémité (11) de plus petit diamètre dudit axe, et, en ce qu'un épaulement (14) assure le raccordement de la partie médiane (13) avec la partie d'extrémité (11) de plus petit diamètre (D6) de l'axe (10) et constitue une face d'appui de blocage en position de l'axe (10) sur celle (3) des deux branches qui comporte le trou (6) coopérant avec l'extrémité filetée (6) de plus petit diamètre (D6) dudit axe (10).

## Claim

Pivot pin placed between two pieces (1 and 2) and causing the pivotable connection of said pieces, constituted by :
a fork with at least two parallel shanks (3, 4), provided on one (1) of said two pieces,
a pivot hinge (5) integral with the second piece,
three co-axial holes (6, 7, 8) provided in the two shanks and in the said hinge, respectively, and,
a pivoting axle (10) which is concomitantly introduced into these three holes, and which comprises two end parts (11, 12) of different diameter, one (12) of said end parts being threaded and designed to cooperate with a tapping (7) provided in the hole formed in one (4) of the shanks of the fork of the first piece, and a middle part (13) situated between said two end parts (11, 12), which constitutes the pivotable part proper of the connection, which cooperates with the hole (8) provided in the second piece (2) and, of which the diameter (D8) is smaller than the largest (D7) of the diameters of the two end parts, characterized in that the other (11) of the two end parts is also threaded according to a pitch of equal value and situated on the same helix as the pitch of the first threaded end part (12), and is adapted to cooperate with a tapping (6) corresponding provided in the hole formed in the other shank (3) of the fork of the first piece, in that the diameter (D8) of the middle part (13) of axle (10) is greater than the external diameter (D6) of the threading of the end (11) of smaller diameter of said axle, and, in that a shoulder (14) connects the middle part (13) with the end part (11) of smaller diameter (D6) of axle (10) and constitutes a support face locking the axle (10) in position on that (3) of the two shanks which comprises the hole (6) cooperating with the threaded end (6) of smaller diameter (D6) of said axle (10).

## Patentanspruch

Zwischen zwei Stücken (1 und 2) angeordneter Montagezapfen, z. B. zur Herstellung einer Schwenkverbindung zwischen diesen beiden Stücken, bestehend aus :
einer Gabel mit zumindest zwei parallelen Ästen (3, 4), mit der ein erstes (1) der beiden Stücke versehen ist,
einem zum zweiten Stück (2) gehörenden Zapfenscharnier (5),
drei in den beiden Ästen bzw. im Scharnier vorgesehenen koaxialen Löchern (6, 7, 8), und

einer gleichzeitig in diesen drei Löchern eingesetzten Zapfenachse (10), die zwei Endteile (11, 12), deren Durchmesser unterschiedlich sind, wobei der eine (12) dieser Endteile ein Gewinde aufweist und mit einem im Loch, mit dem einer (4) der Äste der Gabel des ersten Stücks versehen ist, vorgesehenen Innengewinde (7) zusammenwirken kann, und einen Mittelteil (13) umfaßt, der sich zwischen den beiden Endteilen (11, 12) befindet, der den eigentlichen Drehteil der Anordnung bildet, der mit dem Loch (8), mit dem das zweite Stück (2) versehen ist, zusammenwirkt und dessen Durchmesser (D8) einen Wert hat, der niedriger als der größere (D7) der Durchmesser der beiden Endteile ist, dadurch gekennzeichnet, daß der andere (11) der beiden Endteile ebenfalls ein Gewinde entsprechend einer Steigung von gemeinsamem Wert und auf einer gemeinsamen Schraube mit dem ersten mit Gewinde versehenen Endteil (12) aufweist und mit einem im Loch, mit dem der andere Ast (3) der Gabel des ersten Stücks versehen ist, entsprechend angebrachten Innengewinde (6) zusammenwirken kann, daß der Durchmesser (D8) des Mittelteils (13) der Achse (10) größer als der Außendurchmesser (D6) des Gewindes des Endes (11) kleineren Durchmessers der Achse ist, und daß eine Schulter (14) den Anschluß des Mittelteils (13) am Endteil (11) geringeren Durchmessers (D6) der Achse (10) herstellt und eine Anlagefläche zur Blockierung der Achse (10) in der Position auf jenem (3) der beiden Äste, der das mit dem mit Gewinde versehenen Ende (6) kleineren Durchmessers (D6) der Achse (10) zusammenwirkende Loch aufweist, bildet.

Fig.1

Fig.2